Europäisches Patentamt

European Patent Office

Office européen des brevets

(11) Publication number: **0 414 195 A2**

# EUROPEAN PATENT APPLICATION

(21) Application number: 90115939.2

(22) Date of filing: 20.08.90

(51) Int. Cl.5: **H02H 9/02**, H02H 9/04, H02H 9/06

(30) Priority: 21.08.89 JP 213062/89

(43) Date of publication of application:
27.02.91 Bulletin 91/09

(84) Designated Contracting States:
DE FR GB NL

(71) Applicant: MITSUBISHI MINING & CEMENT
CO., LTD.
5-1, Marunouchi 1-chome Chiyoda-ku
Tokyo 100(JP)

(72) Inventor: Yoshioka, Naruo
1019, Ooaza Yokoze, Yokoze-machi
Chichibu-gun, Saitama(JP)
Inventor: Ito, Takaaki
1014, Ooaza Yokoze, Yokoze-machi
Chichibu-gun, Saitama(JP)
Inventor: Kurihara, Takashi
1019, Ooaza Yokoze, Yokoze-machi
Chichibu-gun, Saitama(JP)

(74) Representative: Pellmann, Hans-Bernd,
Dipl.-Ing. et al
Patentanwaltsbüro
Tiedtke-Bühling-Kinne-Grupe-Pellmann-Gra-
ms-Struif Bavariaring 4
D-8000 München 2(DE)

(54) Protection circuit protected from overvoltage and overcurrent.

(57) A protection circuit is provided for protecting a semiconductor circuit or a communication line , e. g. a line for telephone and telecopier, a line for a cable television and a cable radio and the like, from a lightning surge as well as from continous overvoltage or overcurrent. The protection circuit comprises an electrical source connected to the equipment or circuit for supplying current to the equipment or circuit, a surge absorbing device arranged in parallel with the equipment or the circuit for absorbing a surge from said electrical source to the equipment or circuit, a positive thermistor having a high positive resistance temperature coefficient, arranged in series to the equipment or the circuit at a position between the electric source and the surge absorbing means, and a resistor connected in series to the semiconductor circuit or the line, at a position between the thermistor and the electric source. The current flowing through the protection circuit can be restricted without opening the circuit by melting a fuse. The electric current flowing through the microgap surge absorbing element can be suppressed by operating the positive thermistor so as to avoid overheating and firing of the circuit, thus providing both personnel and equipment protection. In addition, the protection circuit is passive except for the condition of overload when overvoltage and overcurrent exceed the fuse rating or the firing voltage rating of the surge absorbing element, therefore, it results in no need for calibration.

FIG.2

## PROTECTION CIRCUIT PROTECTED FROM OVERVOLTAGE OR OVERCURRENT

### Field of the Invention

The present invention relates to a circuit for protecting a semiconductor circuit or a telephone line from a lightening surge and overvoltage or overcurrent. Particularly, it relates to the circuit using a surge absorber, which can protect the semiconductor circuit or the telephone lines from a lightening surge as well as from continuous overvoltage or overcurrent which may be generated by short-circuit with an alternative current electric source and the like.

### Description of the Prior Art

There has been used a protection circuit for protecting an equipment such as a communication line, e.g. a telephone line for telephone and telecopier, and a line for a cable television and a cable radio and the like, from a lightening surge and overvoltage or overcurrent, which includes a fuse or metallic wire of low melting temperature as combined with an element for absorbing a surge such as surge from e.g. arrestor or varistor. When a surge caused by, for example, a thunder is generated, a protection of the semiconductor circuit is attained by maintaining a level of voltage below a response voltage of the surge absorbing element, corresponding to a voltage for starting electric discharge in case where the element is formed by the arrestor, and to a varistor voltage in case where the element is formed by the varistor.

For an overvoltage or overcurrent, a fuse is provided which is broken by an electric current generated in the fuse itself or by a generation of heat of the surge absorbing element, so that the circuit is made open, thereby protecting the circuit.

For an overvoltage or overcurrent, both of the surge absorbing element and fuse can not be operated in the case where the value of the element voltage is lower than the response voltage value and where the value of the electric current is lower than the breaking current value of the fuse, thereby maintaining the circuit to be closed. Thus, the protection of the circuit can not be realized.

In case of the recent semiconductor circuit, a Zenor diode is connected in parallel to the circuit in order to attain a protection thereof. In this case, all of an overcurrent as generated is directed into the Zenor diode, so that the surge absorbing element does not operate properly, thereby causing the Zenor diode to be overheated under an electric current smaller than the melting temperature.

In the other words, heretofore, protective networks for protecting the equipment from overvoltages have employed a spark gap surge absorbing element to shunt overvoltage and excessive currents form the input conductor to ground, and further employed a series connected fuse for disconnecting or open circuiting to the source of overvoltage or current from the equipment to be protected. Such a protective network is described in U.S. Pat. Nos. 3,448,341 and 3,795,846 and NASA Tech. Brief No. 69- 10490, Oct. 1969.

Further, there have been published Japanese Patent Laid-open Publication Nos. 63-99725, 63-205026/1988 and 64-77426/1989 as measures to resolve the case where the short-circuit with source such as alternative current source of 600 volt occurs, each of which discloses respectively a method of preventing overheat and fire of a surge absorbing element by opening the circuit with a fuse melting, or by contacting a low-melting point metal wire with the surface of a microgap surge absorbing element so that the heat generated by overvoltage or overcurrent charged in the surge absorbing element will melt the low melting point wire, thereby, making to open the circuit.

In the above-mentioned methods, because a fuse and a low melting point metal wire are fused or melt, a telephone and cable television can not be used even after the short-circuit is dissolved, and a fuse and a low melting point metal wire must be exchanged, and further a microgap surge absorbing element should be exchanged.

Many attempts have been made to resolve these problems in the protection circuit for protecting a communication line and telephone switchboard and the like from a lightening surge and overvoltage or overcurrent without need of exchanging the element(s) after the circuit is made to be opened.

### Summary of the Invention

With the foregoing considerations in mind, the present invention contemplates the provision of an improved protection circuit.

It is an object of the present invention to provide a circuit for protecting a semiconductor circuit or a telephone line from a surge such as thunder surge and overvoltage or overcurrent.

It is another object of the present invention to provide a protection circuit which can protect without opening the circuit when the telephone line is charged with overvoltage or overcurrent, for example, by contacting the electric source.

It is further object of the present invention to provide a protection circuit which will not generate firing not overheat at the microgap surge absorbing element even when the line to be protected is charged with overvoltage or overcurrent, i.e. by short-circuit with the electric source.

## BRIEF DESCRIPTION OF THE DRAWINGS

FIG. 1 shows schematically the prior art protection circuit in experimenting on a short-circuit with an electric source.

FIG. 2 shows schematically a protection circuit according to the present invention, which comprises a microgap surge absorbing element arranged in parallel with the telephone, and a thermistor 4 with positive resistance temperature coefficient, in series with the telephone.

FIG. 3 shows schematically a structure for experimenting on a short-circuit of the protection circuit of the present invention with a source with a controlling resistor 2.

FIGS. 4 and 5 show other embodiments of the protection circuit in accordance with the present invention.

## Detailed Description of Preferred Embodiments

In accordance with the present invention, a protection circuit for protecting a communication equipment or a semiconductor circuit, comprising; an electrical source connected to the equipment or circuit, for supplying current to the equipment or the circuit; a surge absorbing device arranged in parallel with the equipment or the circuit, for absorbing a surge from said electrical source to the equipment or the circuit; a positive thermistor having a high positive resistance temperature coefficient, arranged in series to the equipment or the circuit, at a position between the electric source and the surge absorbing means, and; a resistor connected in series to the semiconductor circuit or the line, at a position between the thermistor and the electric source.

Preferably, the used thermistor has a switching temperature at the temperature of 65 °C to 165 °C.

Further, preferably, the thermistor has a nominal zero charging resistance value at the value lower than 1 Kilo-Ohm.

In accordance with the present invention, the current flowing through the protection circuit can be restricted without opening the circuit, as produced in the prior art protection circuit by fusing or melting the fuse or the low melting temperature metal wire, when the overvoltage or overcurrent is applied to the circuit, e.g. by a short-circuit to the electric source.

A surge absorbing element is arranged in parallel with the equipment to be protected, and a positive thermistor is connected in series to both of the equipment to be protected and the surge absorbing element so as to form a protection circuit. Therefore, the protection circuit can be made open without any fuse nor melting (irreversible dissolution) of a fuse or a low melting point metal wire, where overvoltage or overcurrent is applied to the equipment e.g. by interconnecting of the equipment with an electric source. In the other words, the electric current flowing through the protection circuit (the microgap surge absorbing element) can be suppressed by operating the positive thermistor so as to avoid overheating and firing of the circuit and the substrate.

The combination of the gap surge absorbing element and the thermistor can enable to accomplish correct control of the circuit.

A positive thermistor to be used in the inventive protection circuit is a thermo-sensing element of increasing drastically the resistance value with the increase of the circumstantial temperature, i.e. a thermistor having positive -temperature resistance coefficient characteristics.

When the temperature of the element is raised, the resistance of the element will be increased, and then the element has a switching property. When the excessive current flows through the positive thermistor, it is heated so as to increase drastically the resistance value thereof. The inventive protection circuit utilizes this feature of the positive thermistor.

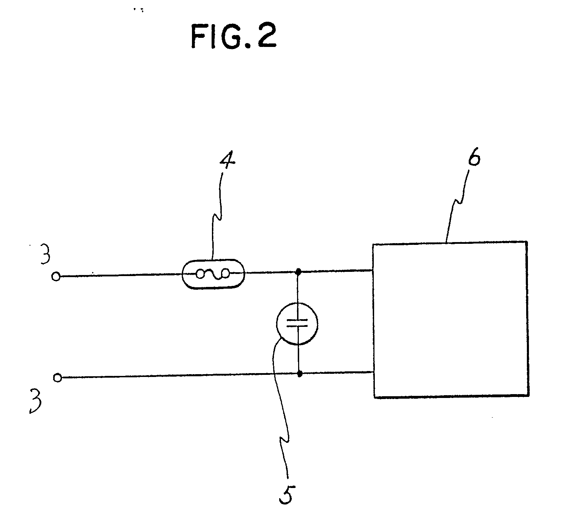

The protection circuit of the present invention has the structure as shown in FIG. 2. A surge absorbing element 5 is arranged in parallel with a telephone 6, and a positive thermistor 4 is connected in series with the telephone 6. When an overvoltage of AC 600 V is connected to the terminals 3 of the circuit, the microgap surge absorbing element 5 is discharged, and at the same time, the overvoltage current flows through the positive thermistor 4. The overvoltage current flowing through the positive thermistor 4 will drastically raise the resistance value of the positive thermistor, and then the current flowing through the microgap surge absorbing element will decrease or be controlled so as to suppress the current value below the current that generates overheating, thereby avoiding overheating and firing of the absorbing element.

Such positive thermistor has preferably a switching temperature of 60 °C to 165 °C. When the switching temperature is upto 65 °C, the protection circuit can be operated at the use temperature of the equipment to be protected. When the switching temperature exceeds 165 °C, the heat can affect the resin of the substrate, and the circuit substrate can be dangerous.

Such positive thermistor has preferably a nominal zero charge resistance value lower than 1 Kilo ohm. When the nominal zero charge resistance value exceeds one Kilo ohm, the excessive energy loss can occur, and the circuit and the equipment can be affected.

The present invention is further illustrated by the following examples to show the inventive circuit and the short-circuit experiment, but should not be interpreted for the limitation of the invention.

EXAMPLE 1

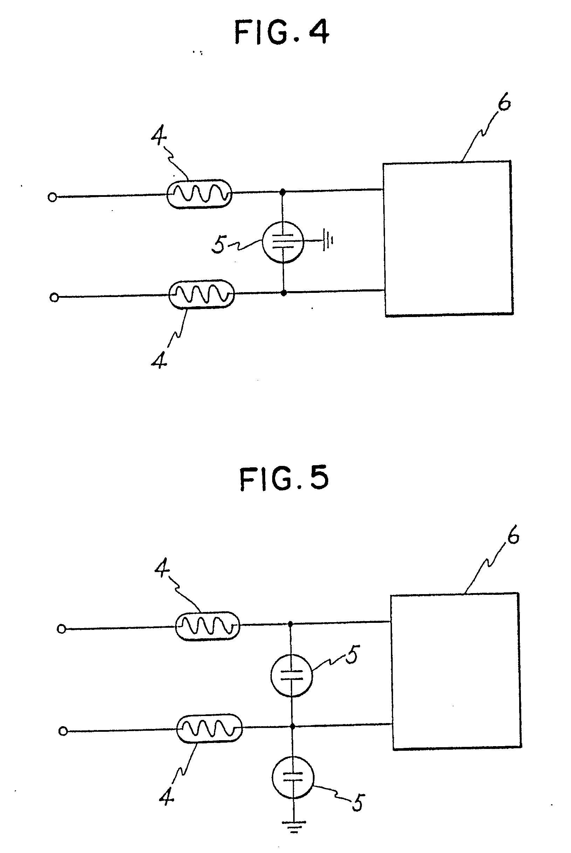

FIG. 3 shows an embodiment of the protection circuit, and the experimental structure for experimenting on a short circuit with a source with controlled resistor.

A microgap surge absorbing element 5 with direct current discharging voltage of 400 V is arranged in parallel to a telephone set 6, and a positive thermistor 4 with nominal zero charging resistance of 8 ohm, and a switching temperature of 80 °C is arranged in series to the telephone 6 and the absorbing element 5.

A connector 3 as shown in FIG. 3 is arranged to connect an AC source (AC 600V) 1 through a controlling resistor ( 15 ohm ) 2 with the protection circuit to be tested.

As a comparison circuit, a protection circuit as shown in FIG. 4 using a surge absorbing element was tested in the similar structure as shown in FIG. 4. This comparison circuit comprises a microgap surge absorbing element 15 having the direct current discharging voltage of 400 V adjacently provided with a low melting point melt wire 14 with a melting point of 410 °C. The source 11 with a controlling resistor of ohm will provide an alternative current with 600 V in maximum voltage.

The above mentioned two species of the protection circuits were tested by charging overvoltage of 600 V. The result is described as below.

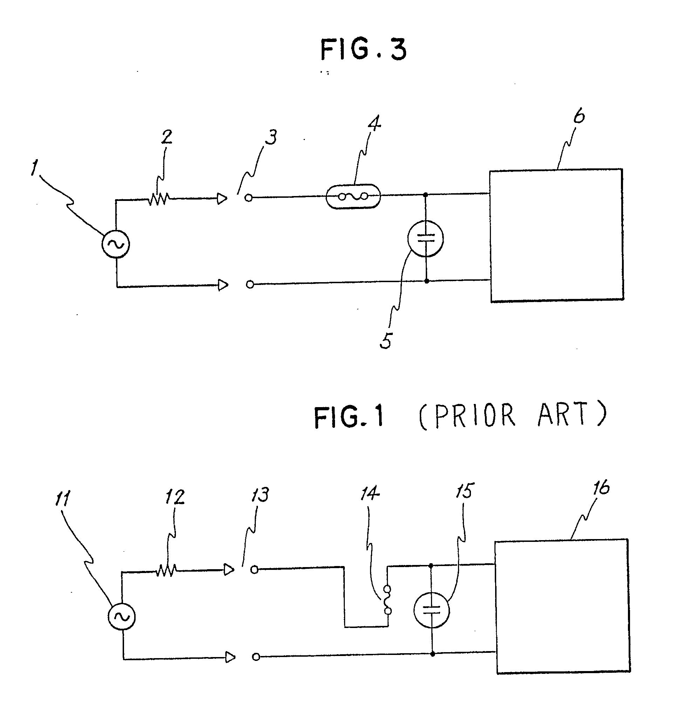

In the protection circuit as shown in FIG. 1, the low melting point wire fused at 35 miliseconds after charging the overvoltage (connecting to the source 11), the circuit was opened without firing of the surge absorbing element.

In the inventive protection circuit as shown in FIG. 3, the current value flowing through the microgap surge absorbing element decreased drastically from 1.7 A to 0.01 miliampere at about 20 miliseconds after charging the overvoltage (connecting with the source), and then the charging continued for 10 minutes, but no overheat nor firing was found in the circuit structure. Further, after the charging discontinued, the function of the protection, i.e. the functions of the positive thermistor and the microgap surge absorbing element was recovered, and the characteristics was not changed.

EXAMPLE 2

FIG. 3 shows the structure of the protection circuit, and the experimental structure for experimenting on a short circuit with a source with controlled resistor.

A microgap surge absorbing element 5 with direct current discharging voltage of 400 V is arranged in parallel to a telephone set 6, and a positive thermistor 4 with nominal zero charging resistance of 8 ohm, and a switching temperature of 80 °C is arranged in series to the telephone 6 and the absorbing element 5.

A connector 3 as shown in FIG. 3 is arranged to connect an AC source (AC 600V) 1 through a controlling resistor ( 275 ohm ) 2 with the protection circuit to be tested.

As a comparison circuit, a protection circuit as shown in FIG. 4 using a surge absorbing element was tested in the similar structure as shown in FIG. 4. This comparison circuit comprises a microgap surge absorbing element 15 having the direct current discharging voltage of 400 V adjacently provided with a low melting point melt wire 14 with a melting point of 410 °C. The source 11 with a controlling resistor of 275 ohm will provide an alternative current with 600 V in maximum voltage.

The above mentioned two species of the protection circuits were tested by charging overvoltage of 600 V. The result is described as below.

In the protection circuit as shown in FIG. 1, the low melting point wire fused at 2 to 3 seconds after applying the overvoltage (connecting to the source 11), the circuit was opened without firing of the surge absorbing element.

In the inventive protection circuit as shown in FIG. 3, the current value flowing through the microgap surge absorbing element decreased drastically from 1.8 A to 0.005 miliamperes at about 0.5 seconds after applying the overvoltage (connecting with the source), and then the application continued for 10 minutes, but no overheat nor firing was found in the circuit structure.

Further, after the application continued for 30 minutes, and discontinued, the function of the protection circuit, i. e. the functions of the positive thermistor and the microgap surge absorbing element could be recovered, and the characteristics was not changed.

EXAMPLE 3

FIG. 3 shows the structure of the protection circuit, and the experimental structure for experimenting on a short circuit with a source with controlled resistor.

A microgap surge absorbing element 5 with direct current discharging voltage of 400 V is arranged in parallel to a telephone set 6, and a positive thermistor 4 with nominal zero charging resistance of 8 ohm, and a switching temperature of 80 °C is arranged in series to the telephone 6 and the absorbing element 5.

A connector 3 as shown in FIG. 3 is arranged to connect an AC source (AC 600V) 1 through a controlling resistor ( 15 ohm ) 2 with the protection circuit to be tested.

As a comparison circuit, a protection circuit as shown in FIG. 1 using a surge absorbing element was tested in the similar structure as shown in FIG. 1. This comparison circuit comprises a microgap surge absorbing element 15 having the direct current discharging voltage of 400 V adjacently provided with a low melting point melt wire 14 with a melting point of 410 °C. The source 11 with a controlling resistor 12 of 15 ohm will provide an alternative current with 600 V in maximum voltage.

In the protection circuit as shown in FIG. 1, the low melting point wire fused at 35 miliseconds after charging the overvoltage (connecting to the source 11), the circuit was opened without firing of the surge absorbing element.

In the inventive protection circuit as shown in FIG. 3, the current value flowing through the microgap surge absorbing element decreased drastically from 1.7 A to 0.01 miliamperes at about 30 miliseconds after charging the overvoltage (connecting with the source), and then the charging continued for 10 minutes, but no overheat nor firing was found in the circuit structure.

Further, after the charging continued for 10 minutes and discontinued, the function of the protection circuit, i.e. the functions of the positive thermistor and the microgap surge absorbing element was recovered, and the characteristics was not changed.

EXAMPLE 4

FIG. 4 shows an another embodiment of the protection circuit.

A connector 3 as shown in FIG. 4 is arranged to connect an AC source (AC 600V) 1 through a controlling resistor ( 15 ohm ) 2 with the protection circuit to be tested.

The overvoltage currents applied on the circuit can flow separately through each of the thermistors 4 and each of discharging passages in the surge absorbing element 5 to the ground, so as to protect the equipment 6. The overcurrent flows through the central electrode of the two electrode surge absorbing element 5.

Further, after the charging discontinued, the function of the protection, i.e. the functions of the positive thermistor and the microgap surge absorbing element was recovered, and the characteristics was not changed.

EXAMPLE 5

FIG. 5 shows a further another embodiment of the protection circuit.

In this protection circuit, the overvoltage currents applied to the circuit can flow respectively through each of the thermistors 4 and the surge absorbing elements 5 to the ground.

The inventive protection circuit for protecting a communication line from both of lightening surge and overvoltage or overcurrent will provide the following significant effects:

Firstly, it can enable to restrict the overvoltage current in the competitive rate to the prior art protection circuit against the overvoltage and overcurrent applied to the microgap surge absorbing element;

Secondly, it can enable to avoid firing and overheating of the surge absorbing element, and further to avoid firing of a communication equipment;

Thirdly, the protection circuit can protect the equipment without opening the circuit, and then the equipment can be used immediately after the overvoltage discontinues;

Further, the circuit can be repeatedly used without any exchange of the part(s), and thereby providing a practical and uncostly protection circuit.

The advantage of the protection circuit of the present invention is that i provides both personnel and equipment protection from overvoltage and overcurrent which exceeds the fuse rating or the firing voltage rating of the surge absorbing element. Its simplicity results in a large cost reduction over other methods. In addition, the protection circuit is passive except for the condition of overload, therefore, it results in no need for calibration.

A protection circuit is provided for protecting a semiconductor circuit or a communication line e. g. a line for telephone and telecopier, a line for a cable television and a cable radio and the like, from a lightning surge as well as from continous overvoltage or overcurrent. The protection circuit comprises an electrical source connected to the equipment or circuit for supplying current to the equipment or circuit, a surge absorbing device arranged in parallel with the equipment or the circuit for absorbing a surge from said electrical source to the equipment or circuit, a positive thermistor having a high positive resistance temperature coefficient, arranged in series to the equipment or the circuit at a position between the electric source and the surge absorbing means, and a resistor connected in series to the semiconductor circuit or the line, at a position between the thermistor and the electric source. The current flowing through the protection circuit can be restricted without opening the circuit by melting a fuse. The electric current flowing through the microgap surge absorbing element can be suppressed by operating the positive thermistor so as to avoid overheating and firing of the circuit, thus providing both personnel and equipment protection. In addition, the protection circuit is passive except for the condition of overload when overvoltage and overcurrent exceed the fuse rating or the firing voltage rating of the surge absorbing element, therefore, it results in no need for calibration.

## Claims

1. A protection circuit for a semiconductor circuit or a communication (telephone) line comprising;
an electrical source connected to the semiconductor circuit or the line, for supplying current to the semiconductor circuit;
a surge absorbing device arranged in parallel with the semiconductor circuit or the line, for absorbing a surge from said electrical source to the semiconductor or the line;
a positive thermistor having a high positive resistance temperature coefficient, arranged in series to the semiconductor circuit or the line, at a position between the electric source and the surge absorbing means, and;
a resistor connected in series to the semiconductor circuit or the line, at a position between the thermistor and the electric source.

2. The protection circuit according to claim 1, wherein said thermistor has a switching temperature at the temperature of 65 °C to 165 °C.

3. The protection circuit according to claim 1, wherein said thermistor has a nominal zero charging resistance value at the value lower than 1 Kilo-Ohm.

4. A protection circuit for a semiconductor circuit or a telephone line, comprising;
an electrical source connected to the semiconductor circuit or the line, for supplying current to the semiconductor;
a surge absorbing device arranged in parallel with the semiconductor circuit or the line, for absorbing a surge from said electrical source to the semiconductor circuit or the line;
a thermistor having positive resistance temperature, connected in series with the semiconductor circuit or the line, at a position between said electrical source and said surge absorbing means.

5. The protection circuit in accordance with claim 4, wherein said thermistor has positive resistance temperature coefficient.

6. The protection circuit in accordance with claim 5, wherein said thermistor has a switching temperature at the temperature of 65 °C to 165 °C.

7. The protection circuit in accordance with claim 4 or 6, wherein said thermistor has a nominal zero charging resistance value at the value lower than 1 Kilo-Ohm.

# FIG.3

# FIG.1 (PRIOR ART)

EP 0 414 195 A2

# FIG. 2

8

# FIG. 4

# FIG. 5